# EUROPEAN PATENT APPLICATION

(11) **EP 0 549 887 A2**
(43) Date of publication of application: **07.07.1993**
(21) Application number: 92120062.2
(22) Date of filing: 25.11.1992
(51) Int. Cl.: A47J 31/00, A47J 31/44, A47J 31/36

(54) **Compact coffee machine for espresso coffee and filter coffee, otherwise known as American coffee**

(30) Priority: 05.12.1991 IT MI913255
(71) Applicant: Zani, Gianmauro, I-28037 Domodossola (Novara) (IT); Beltrami, Gustavo, I-28020 Vogogna (Novara) (IT)
(72) Inventor: Zani, Gianmauro, I-28037 Domodossola (Novara) (IT)
(74) Representative: Giambrocono, Alfonso, Dr. Ing.

(57) **Abstract**

A combination machine (101, 1) of pump or boiler type for preparing espresso coffee or American coffee, comprising at least one common mouth (4) for delivering the water required for preparing American coffee or espresso coffee. Opposite and below said common mouth (4) there are provided at least one preferably movable panel (8) for supporting cups (9) for the espresso coffee or a filter holder (10) for the American coffee, and a heatable support (11) for a jug (12) for containing the American coffee. The combination machine also comprises means (35, 29) for inhibiting the operation of the machine if a filter holder (32) for espresso coffee is not connected to said mouth (4) when espresso coffee is to be prepared, or if said jug (12) is not resting on its seat (11) and said filter holder (10) for American coffee is not resting on said jug or on said panel (8) when American coffee is to be prepared.

## Description

This invention relates to a compact coffee machine both for espresso coffee and for filter coffee, known hereinafter as American coffee.

Separate machines for preparing espresso coffee and American coffee are well known and have been available for some time.

Combination coffee machines for preparing both espresso coffee and American coffee are also known and available commercially.

As is well known to the expert of the art, these latter machines comprise two different separate hydraulic circuits for conveying the water for the two types of coffee to two separate heating elements, one for the espresso coffee and the other for the American coffee.

Said known combination machines also comprise at least two separate delivery mouths, one for delivering the hot water for the espresso coffee and one for delivering the water for the American coffee. Opposite each of said mouths there is a separate support, ie one for the espresso coffee cups and one for the American coffee container.

Although said combination machines offer the consumer the undoubted advantage of being able to prepare the two types of coffee with a single machine, they have some serious drawbacks.

The first is their considerable bulk, which is unacceptable for domestic use.

In this respect, their size is substantially the sum of the dimensions of an espresso coffee machine plus the dimensions of an American coffee machine. The result is that up to the present time this type of combination machine has not been favourably received because of the difficulty encountered by the consumer in finding a space in the domestic environment which is of sufficient size to accommodate a machine of such dimensions.

The size of such combination machines also negative affects the selling price of the machine, in consideration for example of the problems involved in transporting and storing such machines.

An object of the present invention is to provide a coffee machine for both espresso and American coffee which is of reduced dimensions and of low cost.

A further object is to provide a machine of simple and reliable operation.

These and further objects which will be apparent to the expert of the art are attained by a coffee machine of the aforesaid type, in accordance with the accompanying claims.

The present invention will be more apparent from the accompanying drawings, which are provided by way of non-limiting example and in which:
Figure 1 is a schematic longitudinal section through a boiler-type coffee machine according to the invention arranged for preparing espresso coffee;
Figure 2 is a schematic longitudinal section through the coffee machine of Figure 1 arranged for preparing American coffee;
Figure 3 is a schematic longitudinal section through a modification of the machine shown in Figures 1 and 2;
Figure 4 is a schematic longitudinal section through a pump-type coffee machine according to the invention arranged for preparing espresso coffee;
Figure 5 is a schematic longitudinal section through the coffee machine of Figure 4 arranged for preparing American coffee;
Figure 6 is a schematic longitudinal section through a modification of the machine shown in Figures 4 and 5.

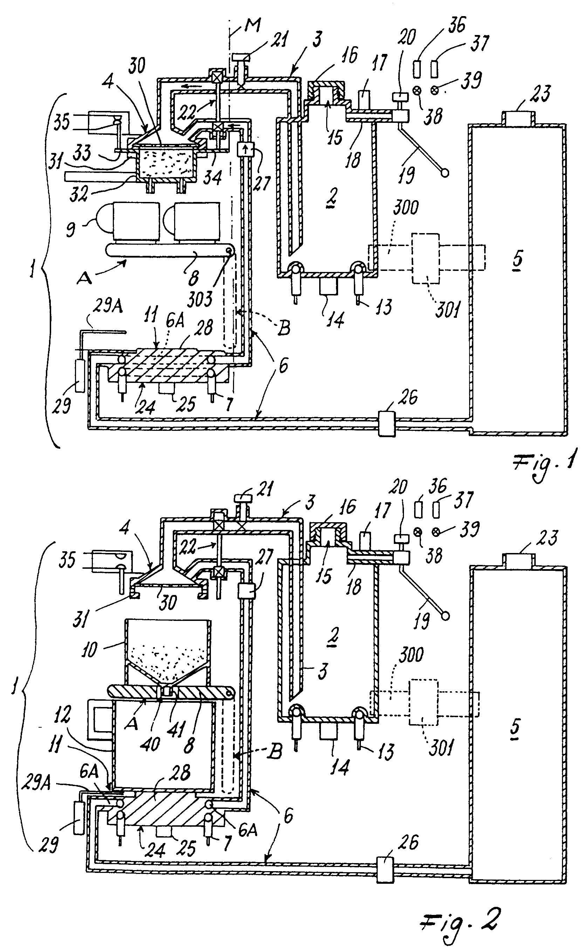

With reference to Figures 1 and 2 the coffee machine, indicated overall by 1, comprises:
- a single water delivery mouth 4 for the preparation of both espresso coffee and American coffee;
- a preferably movable (hinged) panel 8 opposing said delivery mouth 4 and on which either cups 9 or a usual filter holder 10 for American coffee can be placed, depending on the coffee to be prepared;
- a heatable support 11, also opposing the delivery mouth 4, for a usual jug 12 for containing the American coffee;
- a boiler 2 for producing steam used during the preparation of espresso coffee and a pipe 3 for conveying pressurized water from the boiler to the delivery mouth 4;
- a vessel 5 (of greater capacity) for the water for preparing American coffee, connected to a pipe for conveying the water contained in the vessel to heating elements 7 positioned at the support 11 and then to said delivery mouth 4.

The pressurization boiler 2 comprises a resistance heating element 13 on its base, controlled by a thermostat 14 to heat the water contained in the boiler, an aperture 15 in its upper part, ie where the steam forms, for feeding water into the boiler and closed by a plug 16, and a safety valve 17 located in a branch 18.

The initial part of the pipe 3 dips into the boiler in order to convey the pressurized water to the delivery mouth 4.

The boiler is also connected via the branch 18, comprising a manually operated control valve 20, to a conventional spout for steam emission, for example for preparing cappuccino or similar drinks.

The conveying pipe 3 from the boiler 2 to the mouth 4 comprises a tap 21 and a seat for a shut-off valve 22 arranged to alternately close either the pipe 3 or the pipe 6 depending on the type of coffee to be prepared.

The greater-capacity non-pressurized vessel 5 for the American coffee water comprises an aperture 23 (closable by a plug, not shown) for feeding water into it, a window (not shown) for checking the water level in the vessel, and a lower aperture connected to one end of the pipe 6.

This latter comprises a portion 6A in contact with a heating element 24 incorporating the resistance elements 7 and a thermostat 25. Said portion, said heating element and said thermostat are positioned at the support 11 for the jug 12.

That portion of the pipe 6 between the vessel 5 and the heating element 24 comprises a first non-return valve 26, and that portion between the heating element 24 and the mouth 4 comprises a second non-return valve 27 and the seat for said alternately closing shut-off valve 22.

The support 11 for the jug 12 to contain the American coffee comprises a plate 28 of heat-convective material connected to the heating element 24 so that the heat from this latter is transferred to the plate 28 and from the plate to the jug.

The support 11 also comprises a safety switch 29 for interrupting the power supply to the resistance element 7 and hence the heating of the element 24 and of the plate 28, when a jug is not present on the seat 11. For this purpose the switch comprises a control arm 29A which is lowered when the jug 12 is placed on the support 11.

As stated, both the hot water pipes 3 and 6 open into the delivery mouth 4, which is of substantially frusto-pyramidal form with a circular base. This mouth also comprises a usual mesh 30 and a usual ring connector 31 to cooperate with an espresso coffee filter holder 32 for its removable retention (Figure 1). In addition to the conventional means for its engagement with the ring connector and the likewise conventional handgrip, the filter holder comprises a first tongue 33 cooperating with a switch 35 shown schematically in the figure and arranged to enable the activation of the resistance element 13 of the boiler 2, and a second tongue 34 cooperating with the stem of the shut-off valve 22 so as to close the pipe 6 and open the pipe 3 when the filter holder 32 is mounted on the delivery mouth 4.

The machine according to the invention also comprises a manual switch 36 for activating the resistance element 13 of the boiler 2, a manual switch 37 for activating the resistance element 7 and two indicator lamps 38, 39 for indicating when the machine is ready for one of the two uses.

The movable panel 8 is hinged to the machine body and can be moved into two different positions (indicated by the arrows A and B in Figures 1 and 2). The panel also comprises a central aperture 40 to be penetrated by the spout 41 of the filter holder 10, through which the American coffee can fall into the jug. The panel in question can be removably retained in position A by any known means, such as pins carried by a fixed part and loaded by springs to penetrate into a hole in the panel or below it.

In a modified embodiment, not shown, the hinging pivot 303 of the movable panel 8 is not connected directly to the machine body but to a conventional slide (not shown) movable along conventional rails (not shown) associated with the machine body. In this manner the panel 8 is no longer only rotatable between the two positions A and B, but can also be moved vertically along the vertical axis M (Figure 1) of the machine.

The slide is fixed to the rails at the desired distance from the mouth 4 by conventional means known to the expert of the art, such as friction means or by screws and wing nuts. In this manner filter holders and/or cups of different height can be rested on the panel 8 and hence be set at the optimum distance from the mouth.

The operation of the coffee machine is as follows. If espresso coffee is to be prepared (Figure 1), the boiler 2 is filled with water, and the filter holder 32 previously filled with ground coffee is mounted on the mouth 4. The switch 36 is operated to activate the resistance element 13, which begins to heat the water in the boiler 2, part of which is converted into steam. As soon as the temperature in the boiler reaches a predetermined value, the thermostat 14 switches over to deactivate the resistance element 13 and light the enabling lamp 38.

It should however be noted that the activation of the resistance element 13 is possible only when the filter holder 32 is connected to the mouth 4. This action closes the safety switch 35 to enable power to reach the switch 36 which controls the resistance element 13, hence if the filter holder 32 is not connected to the mouth 4 the resistance element 13 cannot be powered, so preventing misuse of the machine according to the invention.

When the indicator lamp 38 lights, the machine user opens the tap 21, so that water flows through the pipe 3, into the mouth 4 and then into the filter holder 32 to produce coffee, which flows into the underlying cups.

To prepare American coffee (Figure 2),the machine is operated as follows.
The filter holder 10 is firstly positioned on the panel 8 so that its conventional spout 41 penetrates through the aperture 40 in the panel and is substantially opposite the mouth 4, after which the jug 12 is positioned on the support 11.

Alternatively, the movable panel 8 can be lowered into position B and the filter holder 10 rested directly on the jug 12.

The switch 37 is then operated to activate the resistance element 7 of the heating element 24.

As the water present in the pipe portion 6A heats up it becomes pressurized to a certain extent, and as it is unable to flow back to the vessel 5 because of the presence of the valve 26, it flows into the delivery mouth 4 and from there into the filter holder 10 and then into the jug 12.

As a result of the emergence of the heated water, water is again drawn into the pipe to replace that which has emerged, and after the time required for it to heat up and become pressurized it flows into the mouth 4.

It should be noted that on positioning the jug 12 on the seat 11 the safety switch 29 is simultaneously closed to enable power to reach the switch 37 which controls the resistance element 7. Hence if the jug is not positioned on its seat 11, the resistance element 7 cannot be activated, so preventing misuse of the machine. Lack of water in the vessel 5 leads to temperature increase of the heating element 24, which when it reaches a predetermined temperature causes the thermostat 25 to switch over, so deactivating the resistance element 7 and lighting the indicator lamp 39 to warn of the lack of water in the vessel 5, the extent of filling of which depends on the quantity of coffee required.

As the machine of the invention has a single water delivery mouth used for both types of coffee and has only one seat opposite the mouth for both espresso coffee cups and the jug and filter for American coffee, it is very compact and is of considerably smaller overall size than known combination coffee machines.

Compared with these latter, the machine according to the invention offers considerable improvements, including with regard to the problems relating to user safety and the intermittent water delivery for American coffee, by virtue of the two non-return valves 26, 27. The provision of the switches 36 and 37 and the valve 22 protects the user against inexpert or distracted use of the machine.

In a modification to the machine of Figures 1 and 2, a pipe 300 (shown by dashed lines in Figures 1 and 2) connects the vessel 5 to the base of the boiler 2.

The pipe 300 comprises a non-return valve 301 which enables water to flow only from the vessel 5 to the boiler 2 and not in the other direction. In the illustrated embodiment the pipe 300 is connected to the middle part of the vessel 5, however by obvious modifications to the vessel it could instead be connected to the base thereof.

The addition of the pipe 300 enables the boiler 2 to be filled directly with water from the vessel 5.

In this respect, on opening the tap 20 of the steam spout 19, acting in this case as a vent valve, and filling the vessel 5, the water also flows into the boiler 2 by the principle of communicating vessels.

A further modification of the described embodiment of Figures 1 and 2 is shown in Figure 3 (in which those elements common to the two embodiments are indicated by the same reference numerals and are not further described).

In this embodiment a single pipe 3A is provided for conveying the water both for espresso coffee and for American coffee. The pipe 3A is connected to the delivery mouth 4 and has its initial portion dipping into the boiler 2.

This latter is larger than in the previously described machine as it has to contain the water for both types of coffee.

As in the preceding case, the pipe 3A comprises a tap 21 and a shut-off valve 22, and in addition comprises a usual shut-off valve 50 controlled by a timer of electronic or mechanical type, the importance of which will be apparent hereinafter.

The support 11 for the jug comprises a flat element 51 of heat-convective material associated with the base of the boiler 2 so as to transfer part of the boiler heat to the part 52 of said flat element on which the jug 12 rests.

Said part 52 can also be advantageously associated with a resistance element 53 controlled by a thermostat 54 for heating said part 52, even when the resistance element 15 of the boiler is not activated but it is required to maintain the coffee contained in the jug hot.

The filter holder 10 for the American coffee in this second embodiment comprises an upper rim 55 arranged to cooperate with the safety switch 35 and with the stem of the shut-off valve 22 in the same manner as the tongue 34 of the espresso coffee filter holder of Figure 1.

When preparing espresso coffee the machine is operated in substantially the same manner as in the preceding case, and will not be repeated.

When preparing American coffee, the flow from the boiler to the mouth 4 and from there to the filter 10 is controlled by the known timed valve 50 in such a manner as to be discontinuous and to hence simulate the intermittent flow of heated water into the filter as in the preceding embodiment.

This intermittent flow enables the ground coffee contained in the filter 10 to absorb the water originating from the mouth 4, the coffee then running into the jug in optimum manner.

It should be noted that American coffee could also be prepared with a machine of the described type but without the timed valve 50, if the tap 21 is adjusted to nearly close the pipe 3. However in this case the time required for preparing the coffee is extended, and the tap adjustment is very difficult.

The machine of this embodiment is of smaller overall size than the preceding embodiment, and the constituent elements of the machine are considerably simplified.

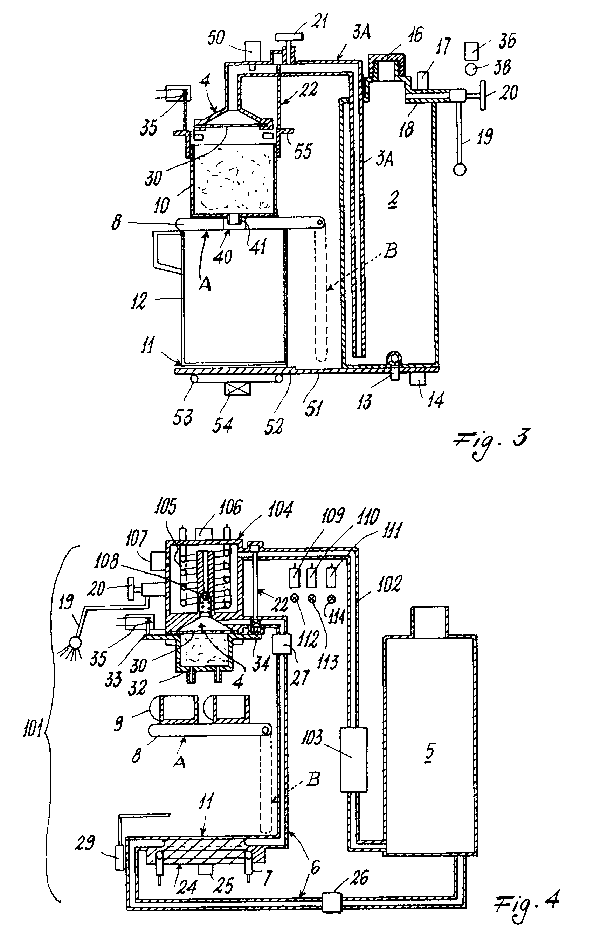

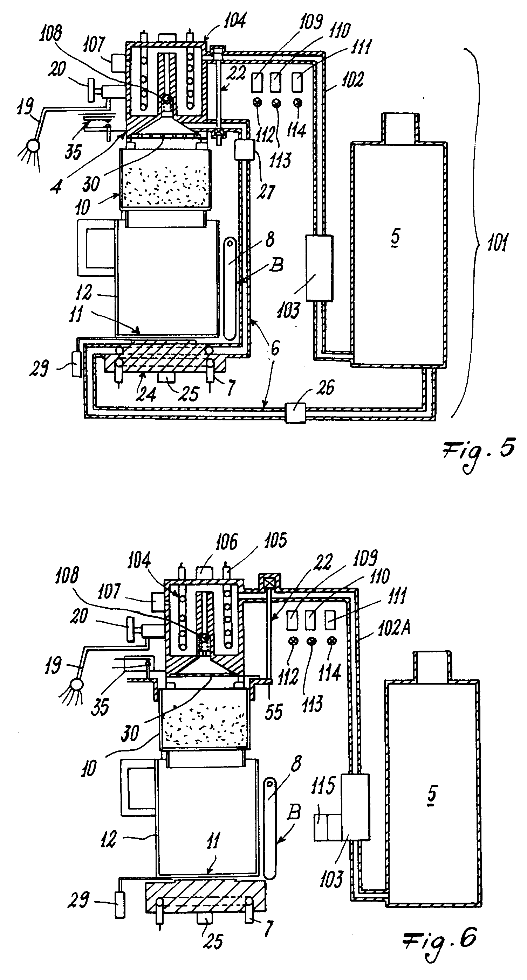

Figures 4 and 5 show a coffee machine according to the invention, indicated overall by 101, using a feed pump 103 (those elements common to this and the preceding embodiment are indicated by the reference numerals used in Figures 1, 2 and 3 and will not be further described). As in the preceding embodiments the machine has a single delivery mouth 4, opposite which there is provided the movable panel 8 and a support for a coffee jug 12. The machine also comprises a usual non-pressurized vessel 5 connected to a first pipe 102 and to a second pipe 6. This latter is associated with the same elements as described in relation to Figures 1 and 2, and as in the preceding cases is arranged to feed at intervals to the delivery mouth the heated water required for preparing American coffee.

To the pipe 102 there is connected a usual pump 103 to withdraw water from the vessel 5 and feed it under pressure to a boiler 104 located at the delivery mouth 4. The boiler 104 comprises a resistance element 105 controlled by a thermostat 106, a safety valve 107 and a check valve 108 to prevent the water contained in the boiler from flowing into the mouth 4 if the water is not at a predetermined pressure.

The machine also comprises three switches 109, 110, 111 for activating the resistance element 105 of the boiler 104, for activating the resistance element 7 of the heating element 24 and for operating the pump 103 respectively, and three indicator lamps 112, 113, 114 for indicating when the boiler 104 and the heating element have reached their operating temperature and when the pump is switched on respectively.

To prepare espresso coffee this machine is operated in the following manner.
The filter holder 32 is firstly fitted to the mouth 4 such that as in the preceding cases its tongue 33 close the switch 35 to enable the control switch 110 for the pump 103, and its tongue 34 raises the stem of the valve 22 so as to open the pipe 102 associated with the pump and close the pipe 6 which conveys water for the American coffee.

The switches 109, 110 are now operated to activate the resistance element 105 of the boiler 104 and operate the pump 103, in order to feed pressurized water into the boiler, to then flow into the mouth 4 and filter holder 32.

The shut-off valve 22 and the non-return valve 27 prevent pressurized water flowing into the pipe 6 during the operation of the pump 103.

When coffee delivery has ceased, the filter holder 32 is removed from the delivery mouth 4 so that the tongues 33, 34 of the filter holder open the switch 35 and the valve 22, hence blocking the electrical and hydraulic operation of the machine. When a predetermined temperature is reached in the boiler the thermostat switches off power to the resistance element 105.

To obtain American coffee the machine is operated in the manner described in relation to the machine of Figure 2.

It should be noted that in Figure 5 the filter holder 10 rests directly on the jug and that the movable panel is in position B.

Figure 6 shows a modification of the illustrated combination coffee machine. This modification comprises substantially the same elements as the machine shown in Figures 4 and 5 but differs in that a single pipe 102A is provided for conveying water from the vessel 5 to the mouth 4 both for American coffee and for espresso coffee.

In this modification a usual electronic or mechanical timer 115 is associated with the pump 103 in order to operate the pump at predetermined regular intervals. The operation of the machine for preparing espresso coffee is identical to that described for the machine 101.

To prepare American coffee, as in the preceding cases the jug 12 is positioned on its seat and the filter holder 10 fitted to activate the switch 29 enabling the switch 111 which controls the resistance element 7. The edge 55 of the filter holder 10 closes the switch 35 to enable the switch 109 which controls the boiler resistance element 105, this edge also cooperating with the stem of the shut-off valve 22 to open the machine hydraulic circuit.

The switch 109 is operated to activate the boiler resistance element 105, and as soon as the indicator lamp 112 lights to indicate that the boiler has reached its operating temperature the switch 110 is operated to operate the pump 103. This feeds pressurized water into the boiler 104, the water becoming hotter until it finally overcomes the opposing action of the check valve 108, it then flowing into the mouth 4 and hence into the filter holder 10.

The timer 115 operates the pump 103 intermittently so that the hot water falls onto the coffee present in the filter holder 10 at regular intervals, to hence give the water the necessary time to filter through the coffee in regular manner without flooding the filter holder.

The considerations already made in respect of the machine of Figure 3 also apply to this modification. It likewise represents an improvement over the machine of Figures 4 and 5 in terms of overall size, constructional simplicity and the number of components required.

## Claims

1. A combination machine of pump or boiler type for preparing espresso coffee or American coffee, characterised by comprising at least one common mouth (4) for delivering the water required for preparing American coffee or espresso coffee, opposite and below said common mouth (4) there being provided at least one preferably movable panel (8) for supporting cups (9) for the espresso coffee or a filter holder (10) for the American coffee, and a heatable support (11) for a jug (12) for containing the American coffee.

2. A combination machine as claimed in claim 1, characterised by comprising means (35, 29) for inhibiting the operation of the machine if a filter holder (32) for espresso coffee is not connected to said mouth when espresso coffee is to be prepared, or if said jug (12) is not on its seat (11) and said filter holder (10) for American coffee is not resting on said jug or on said movable panel (8) when American coffee is to be prepared.

3. A combination machine as claimed in claim 2, characterised in that said means for inhibiting the operation of the machine are at least one switch (29) arranged to inhibit the activation of a resistance element (7) for heating at least a portion of said support (11) for said jug (12), if said jug (12) is not correctly positioned on said support.

4. A combination machine as claimed in claim 2, characterised in that said means for inhibiting the operation of the machine are at least one switch (35) arranged to inhibit the activation of a resistance element (105, 13) of a boiler (104, 2) for heating the water, if said filter holder (32, 10) for espresso coffee or for American coffee is not correctly connected to said delivery mouth (4).

5. A combination machine as claimed in claim 1, characterised by comprising means for interrupting the flow of water if a filter holder (32, 10) for American coffee or for espresso coffee is not connected to said mouth (Figures 3, 4).

6. A combination machine as claimed in claim 5, characterised in that said means (22, Figures 3, 6) for interrupting the flow of water are at least one shut-off valve provided in the water feed pipe (3A) to said mouth (4) and having its stem cooperating with a portion (55) of said filter holders (10, 32).

7. A combination machine as claimed in claim 1, characterised by comprising two separate hydraulic circuits (3, 6; 6, 102) for separately conveying to said common mouth (4) the water necessary for preparing espresso coffee or the water necessary for preparing American coffee, both circuits opening into said mouth (4).

8. A combination machine as claimed in claim 7, characterised in that the hydraulic circuit (3, 6; 6, 102) comprises a non-return valve (27) downstream of the support (11), which can be heated.

9. A combination machine as claimed in claim 7 characterised by comprising a single water vessel for feeding said two separate hydraulic circuits (3, 6; 6, 102) and at least one pipe (300), comprising a non-return valve 301, associated with said vessel 5 and with said boiler 2.

10. A combination machine as claimed in claim 1, characterised by comprising a common hydraulic circuit (3A, 102A) for conveying to said mouth (4) the water necessary for preparing both types of coffee.

11. A combination machine as claimed in claim 10, characterised in that with said common hydraulic circuit (3A, 102A) there is associated at least one means (50, 115) for interrupting the water flow at predetermined regular intervals when American coffee is to be prepared.

12. A combination machine as claimed in claim 11 characterised in that said means (115) for interrupting the water flow at predetermined regular intervals is associated with a pump (103) connected to said common hydraulic circuit (102).

13. A combination machine as claimed in one or more of the preceding claims, characterised in that in the case of two pipes (6, 3) for feeding water to the mouth (4) there is provided a reciprocating shut-off means (22; Figures 1, 2, 4, 5) for said pipes, to allow selection of American coffee water flow to the mouth (4).

14. A combination machine as claimed in claim 1, characterised in that said panel (8) is rotationally movable between a first position (A) in which said panel is opposite the mouth (4) and a second position (B) in which the panel is substantially perpendicular to the plane in which the mouth lies.

15. A combination machine as claimed in claim 1, characterised in that said panel (8) is movable substantially along a vertical axis (M, Figure 1) of the machine, so as to vary the distance of the panel hinging pivot (303) from said mouth (4).

16. A combination machine as claimed in claims 14 and 15, characterised in that said panel is movable both rotationally and along said vertical axis (M, Figure 1) of the machine.
